# EUROPEAN PATENT APPLICATION

(11) **EP 4 697 198 A1**
(43) Date of publication of application: **18.02.2026**
(21) Application number: 25186482.3
(22) Date of filing: 30.06.2025
(51) Int. Cl.: G06F 16/3329, G06F 16/532

(54) **EFFICIENT PERFORMANCE OF GENERATIVE TASK(S) USING GENERATIVE MODEL(S)**

(30) Priority: 13.08.2024 US 202418802488
(71) Applicant: Google LLC, Mountain View, CA 94043 (US)
(72) Inventor: SALAMA, Khalid, Mountain View, 94043 (US)
(74) Representative: Thorniley, Peter

(57) **Abstract**

Implementations relate to receiving a free-form natural language input associated with a client device; processing, using a first generative model (GM), first GM input to generate corresponding first GM output; determining, based on the first GM output, an initial query that includes placeholder(s); retrieving placeholder data that includes, for the placeholder(s), a corresponding set of variables and a set of probability values corresponding to the set of variables; determining, based on the initial query, a final query; and providing the final query for processing by the first GM or a second GM. Determining the final query includes, for the placeholder(s): selecting, based on the corresponding set of variables and the set of probability values corresponding to the set of variables, a variable from the corresponding set of variables; and replacing the placeholder(s) with the selected variable.

## Description

### BACKGROUND

Various generative model(s) (GM(s)) have been proposed that can be used to process natural language (NL) content and/or other input(s), to generate output that reflects generative content that is responsive to the input(s). For example, large language models (LLM(s)) have been developed that can be used to process NL content and/or other input(s), to generate LLM output that reflects generative NL content and/or other generative content that is responsive to the input(s). As another example, image generation models have been developed that can be used to process NL content and/or other input(s), to generate visual outputs such as image data that is responsive to the input(s).

In some instances, multiple generative models, and/or multiple types of generative models, can be combined as components of an end-to-end, multi-modal generative model that can be used to process NL content and/or other input(s), to generate visual outputs such as image data that is responsive to the input(s), and/or to generate other outputs such as video data, audio data, and/or text data that is responsive to the input(s). Generative models are typically trained on enormous amounts of diverse data including data from, but not limited to, webpages, electronic books, software code, electronic news articles, and machine translation data. Accordingly, these generative models leverage the underlying data on which they were trained in performing various NL processing (NLP) tasks.

As an example, in performing an image generation task, these generative models can process a free-form NL input that is associated with a client device, and generate image data that is responsive to the free-form NL input and that is optionally to be rendered at the client device. These free-form NL inputs, which can be provided by user(s) of client devices, can include various parameters (referred to herein interchangeably as "parameters" and "variables") for the image generation task. However, NL inputs can also frequently be missing other parameters which are necessary or desirable for efficient completion of the image generation task. For instance, in many scenarios, computational efficiency can be improved by providing detailed and well-defined prompts to image generation model(s) for completion of the image generation task. For these and other reasons, it can be desirable to 'process' these free-form NL inputs with LLM(s) and/or other types of generative model, or via other methods, to generate a more detailed, iterated version of the NL input which defines further parameters for the image generation task. This iterated version of the NL input can then be provided as a prompt and/or query for image generation model(s) and/or other types of generative model to complete the image generation task.

### SUMMARY

Implementations described herein relate to utilizing generative model(s) to improve the efficiency of generative task performance. According to the techniques described herein, queries for prompting image generation model(s) and/or other generative model(s) can be determined in an efficient manner (e.g., with respect to computational and network resources). Processor(s) of a system can: receive a free-form natural language (NL) input associated with a client device; process, using a first generative model (GM), first GM input to generate corresponding first GM output, the first GM input including the free-form natural language input; and determine, based on the first GM output, an initial query, the initial query including one or more placeholders.

In other words, the first GM can be configured to receive an input including a free-form NL input (referred to herein as "NL input" interchangeably), e.g., from a user of the client device, and can be trained to process the input to provide output including an initial query. The NL input can be a request for a content generation task, such as an image generation task. For example, the NL input could be a request to "Generate an image of a car". In this example, the NL input can include a parameter for the image generation task of "a car". However, the NL input is missing other parameters which can be necessary or desirable for efficient completion of the image generation task, such as the "style" of car, and the "color" of the car which should be used for the image generation task. Absent the techniques described herein, the system could prompt the user to provide a "style" and a "color" for the image generation task, or alternatively generate an image with a "style" or "color" which is not appropriate given the circumstances (e.g., contrary to the user's location or preferences) thereby requiring the user to follow up with an additional NL input to generate another image. As a result, computational resources are unnecessarily consumed through the additional interaction due to an increased quantity of user inputs and a prolonging of a duration of the human-to-computer interaction between the user and the generative system. Through techniques described herein, the first GM can be trained to recognize these missing parameters and insert (or otherwise combine with the NL input) 'placeholders' to represent them. In this example, the initial query provided by the first GM could take the form of a request to "Generate an image of a #COLOR #STYLE car", where "#COLOR" represents a first placeholder for the "color" parameter and "#STYLE" represents a second placeholder for the "style" parameter. As such, in various implementations, the initial query can be thought of as a 'customizable' query.

The processor(s) can further: retrieve placeholder data including, for at least each of the one or more placeholders, a corresponding set of variables and a set of probability values corresponding to the set of variables; determine, based on the initial query, a final query; and provide the final query for processing by the first GM or a second GM. In determining the final query, the processor(s) can, for each of the one or more placeholders: select, based on the corresponding set of variables and the set of probability values corresponding to the set of variables, a variable from the corresponding set of variables; and replace the corresponding placeholder with the selected variable;

Returning to the example given above, and firstly considering the first placeholder (#COLOR) for the "color" parameter, placeholder data corresponding to the #COLOR placeholder can be retrieved. This placeholder data can include a set of variables which corresponds to the particular #COLOR placeholder, and a set of probability values corresponding to this set of variables. In this scenario, the set of variables can contain a variety of common car colors (*e.g.,* {RED, YELLOW, GREEN, BLUE, BLACK, WHITE, GREY}), and the corresponding set of probabilities can contain a probability for each of these possible colors (*e.g.,* {0.1, 0.1, 0.1, 0.1, 0.2, 0.2, 0.1}), such that the probability corresponding to RED is 0.1, the probability corresponding to BLACK is 0.2, etc. Secondly, considering the second placeholder (#STYLE) for the "style" placeholder, placeholder data corresponding to the #STYLE placeholder can be retrieved. This placeholder data can include a set of variables which corresponds to the particular #STYLE placeholder, and a set of probability values corresponding to this set of variables. In this scenario, the set of variables can contain a variety of common car styles (*e.g.,* {ESTATE, SALOON, SPORTS, HATCHBACK, SUV, CONVERTIBLE, CITY}), and the corresponding set of probabilities can contain a probability for each of these possible styles (*e.g.,* {0.05, 0.15, 0.1, 0.1, 0.3, 0.1, 0.2}), such that the probability corresponding to ESTATE is 0.05, the probability corresponding to SUV is 0.3, etc.

By sampling (*e.g.,* randomly) the set of variables for the first placeholder (#COLOR) according to the corresponding set of probabilities, a particular variable can be selected to replace the placeholder. For example, since the color "RED" is associated with a probability value of 0.1, roughly 10% of the time, it would be expected that the color "RED" would be selected to replace the #COLOR placeholder, etc. Similarly, by sampling (*e.g.,* randomly) the set of variables for the second placeholder (#STYLE) according to the corresponding set of probabilities, a particular variable can again be selected to replace the #STYLE placeholder. For example, since the style "HATCHBACK" is associated with a probability value of 0.1, roughly 10% of the time, it would be expected that the style "HATCHBACK" would be selected to replace the #STYLE placeholder, etc. It will be appreciated that by replacing the placeholders in this manner, any combination of the different common car colors and different common car styles could be envisaged. Following replacement of each of the placeholders with the selected variables, *e.g.,* using the particular examples mentioned above, the initial query would become a final query of "Generate an image of a RED HATCHBACK car". As such, in various implementations, the final query can be thought of as a fully 'customized' query, or a 'tailored' and/or 'personalized' query. In this way, as compared to, for instance, training a generative model to 'process' the NL input to generate an iterated version of the NL input with the further parameters, *e.g.,* "Generate an image of a green sports car", which would require training the generative model on large amounts of extra training data including examples of different possible combinations of "styles" and "colors" of cars, the implementations described herein can reduce the training data requirements, and computing resources which would be consumed in acquiring and storing the extra training data, as well as in providing further training or prompting for the generative model in order to provide these further parameters, can be conserved.

The final query can then be provided to one or more generative models for processing, e.g., for completing the content generation task, such as the image generation task in the above example. In some instances, the final query could be provided back to the first GM, *e.g.,* the first GM can be a multi-modal GM which comprises image generation capabilities. In other instances, the final query could be provided to a second GM, *e.g.,* a separate GM which comprises a content generation model such as an image generation model.

In some implementations, the processor(s) can: process, using the first GM or the second GM, second GM input to generate corresponding second GM output, the second GM input including the final query; and determine, based on the second GM output, responsive content. The responsive content can be responsive to the free-form natural language input. In some of these implementations, the processor(s) can cause the client device to render the responsive content. In some implementations, the responsive content can include one or more images. In additional or alternative implementations, the responsive content can include one or more portions of video data, one or more portions of audio data, and/or one or more portions of text data.

In other words, in implementations where the final query is provided to the first GM or the second GM, the first GM or the second GM can be configured to receive an input including the final query, and can be trained to process the final query to provide output including responsive content that is responsive to the original NL input (such as one or more images). The first GM and the second GM can, for instance, be hosted locally at the client device and/or remotely at one or more systems remote from the client device. For instance, providing the final query to the second GM can involve transmitting the final query to a system *(e.g.,* a remote server) that implements or manages the second GM. This system can process the final query, determine the responsive content, and optionally return the responsive content, *e.g.*, to the system which transmitted the final query and/or to the client device. In some instances, transmitting the final query to the system which implements or manages the second GM can cause this processing of the final query and determining of the responsive content to occur.

Returning to the example given above, the responsive content can comprise one or more images of the red hatchback car. The responsive content, *e.g.,* the one or more images of the red hatchback car, can then be provided to a client device (*e.g.,* the client device from which the NL input originated) for display or rendering in some other manner. It will be appreciated that the techniques described herein are applicable to a wide range of content generation tasks, such as video generation tasks, audio generation tasks, and text generation tasks, not just image generation tasks. For example, the original NL input could comprise a request to "Generate a video of a car" which could, through the techniques described herein, be processed to determine a final query of "Generate a video of a GREY SALOON car". As another example, the original NL input could comprise a request to "Generate an audio recording of a car" which could, through the techniques described herein, be processed to determine a final query of "Generate an audio recording of a SPORTS car"; in this case, the first GM can be trained to recognize that the #COLOR placeholder is not necessary for an audio generation task. As another example, the original NL input could comprise a request to "Generate a story about a car" which could, through the techniques described herein, be processed to determine a final query of "Generate a story about a YELLOW CITY car". Each of these final queries could be passed to an appropriate generative model, *e.g.,* a video generation model, an audio generation model, a text generation model (such as an LLM), or a multimodal model to provide responsive content including one or more portions of video data, one or more portions of audio data, and/or one or more portions of text data respectively.

In some implementations, the first GM is an LLM. In some implementations, the second GM is an image generation model. In some implementations, the first GM and the second GM are components of an end-to-end GM. In instances where the first GM is an LLM, the LLM can be configured to generate the initial query based on the NL input using the techniques described herein. In instances where the second GM is an image generation model, the image generation model can be configured to generate one or more images based on processing prompts or queries, *e.g.,* based on the final query as described herein, such that the one or more images are responsive to the original NL input. In instances where the first GM and the second GM are components of an end-to-end GM, the end-to-end GM can be a multi-modal GM which is capable of processing a variety of different inputs and providing a variety of different outputs. For example, one portion of the end-to-end, multi-modal GM (referred to herein *e.g.,* as "the first GM") can be capable of processing NL inputs to determine initial queries, and another portion of the end-to-end, multi-modal GM (referred to herein *e.g.,* as "the second GM") can be capable of processing final queries to determine responsive content (*e.g.,* generating one or more images).

In some implementations, the free-form natural language input is determined based on audio data generated by one or more microphones of the client device. This can allow user(s) of the client device to provide the NL input as a voice input. The techniques described herein can be configured to be performed automatically on such voice inputs. For example, receiving a voice input at one or more microphones of the client device can automatically cause determination of the free-form NL input, and could automatically cause processing of the first GM input (including the free-form NL input) by the first GM to occur. This could include transmitting the free-form NL input from the client device to a system (*e.g.,* a remote server) that implements or manages the first GM.

In some implementations, retrieving the placeholder data is based at least in part on context data. In some implementations, the processor(s) of the system can, for a given placeholder of the one or more placeholders: modify, based on context data, the corresponding set of variables and/or the set of probability values corresponding to the set of variables. In some implementations, the context data is indicative of a location of the client device. In some implementations, the context data is indicative of user profile information associated with a user of the client device.

The system(s) that implement the techniques described herein and/or the client device(s) can record and store context data which can be used in various implementations. For example, the placeholder data which is retrieved can be based on a current or previous context indicated by the context data. The context data can indicate a location (such as a city or country) of the client device associated with the NL input and/or a user of the client device associated with the NL input. Based on this location, for example, placeholder data which is specifically adapted to the location can be retrieved. As another example, based on this location, the placeholder data associated with a particular placeholder can be modified (*e.g.,* the corresponding variables can be updated, including adding or removing variables, and/or the corresponding set of probabilities can be altered). Absent these techniques, the system may train separate generative models for different locations, *e.g.,* different generative models for individual cities, countries, etc. The techniques described herein, involving placeholder data specifically adapted or customized for a particular location, can provide a low cost (*e.g.,* low computational cost and/or low network resource cost) alternative to training separate generative models for different locations. Specifically, the computational and/or network resource costs associated with generating and maintaining customized placeholder data for different locations can be much lower than the computational and/or network resources costs associated with training and storing entire customized generative model(s) for the different locations.

Additionally, or alternatively, the context data can indicate user profile information associated with user(s) of the client device. Based on the user profile information (*e.g.,* of a particular user who provided the NL input), for example, placeholder data which is specifically adapted to the particular user profile can be retrieved. As another example, based on this user profile information, the placeholder data associated with a particular placeholder can be modified (*e.g.,* the corresponding variables can be updated, including adding or removing variables, and/or the corresponding set of probabilities can be altered). Absent these techniques, the system may train separate generative models for different users and/or user profiles, *e.g.,* different generative models for individual users, user profiles, client devices, etc. The techniques described herein, involving placeholder data specifically adapted or customized for particular user profile information, can provide a low cost (*e.g.,* low computational cost and/or low network resource cost) alternative to training separate generative models for different user profiles. Specifically, the computational and/or network resource costs associated with generating and maintaining customized placeholder data for different user profile information can be much lower than the computational and/or network resources costs associated with training and storing entire customized generative model(s) for the different user profiles.

Returning to the example given above, context data can indicate that the NL input requesting to "Generate an image of a car" was received at a client device located in Florence, Italy. The placeholder data retrieved for *e.g.,* the #STYLE placeholder can be specifically adapted to the specific location. As one particular example, the set of variables which corresponds to the particular #STYLE placeholder could be the same as that outlined above (*e.g.,* {ESTATE, SALOON, SPORTS, HATCHBACK, SUV, CONVERTIBLE, CITY}), whilst the set of probability values corresponding to this set of variables could be different (*e.g.,* {0.05, 0.05, 0.1, 0.3, 0, 0.1, 0.4}), such that the probability corresponding to SUV is now 0, the probability corresponding to CITY is now 0.4, etc. Additionally, or alternatively, context data can indicate that the NL input requesting to "Generate an image of a car" was received at a client device was received at a client device associated with a user profile of a particular user who is colorblind. The placeholder data retrieved for *e.g.,* the #COLOR placeholder can be specifically adapted to the specific user profile.

As one particular example, the set of variables which corresponds to the particular #COLOR placeholder could be the same as that outlined above (*e.g.,* {RED, YELLOW, GREEN, BLUE, BLACK, WHITE, GREY}), whilst the set of probability values corresponding to this set of variables could be different (*e.g.,* {0.3, 0, 0, 0.3, 0.15, 0.15, 0.1}), such that the probability corresponding to RED is now 0.3, the probability corresponding to YELLOW is now 0, etc. In other examples, rather than retrieving placeholder data specifically adapted for the specific location and/or the specific user profile, generic placeholder data can be retrieved which can be modified based on context data, *e.g.,* based on the specific location and/or the specific user profile, before selecting variable(s) and replacing the placeholder(s).

In some implementations, processor(s) can, for a given placeholder of the one or more placeholders: obtain the placeholder data including the corresponding set of variables and the set of probability values corresponding to the set of variables; and modify, based on user input, the corresponding set of variables and/or the set of probability values corresponding to the set of variables. Rather than modifying the placeholder data based on context data, this can allow a user (*e.g.,* a developer or administrator for one or more of the systems described herein) to manually update and maintain the placeholder data. This can include updating the corresponding variables, including adding or removing variables, and/or altering the corresponding set of probabilities. Users (*e.g.,* a developer or administrator for one or more of the systems described herein) can also create placeholder data from scratch, *e.g.,* as the model is trained and/or fine-tuned to introduce additional placeholders. To create placeholder data for an additional placeholder, for example, the user can create a set of variables for the additional placeholder and a set of probabilities corresponding to this set of variables.

Implementations described herein also relate to fine-tuning a GM (*e.g.,* the first GM as described above) for utilization in generating initial queries including one or more placeholders. For example, prior to causing the GM to be deployed for utilization in generating initial queries, the system can fine-tune the GM to enable it to determine which placeholder(s) to include (and optionally where the placeholder(s) should be injected) in order to generate initial queries. Processor(s) of a system can: obtain a plurality of training instances to be utilized in fine-tuning a generative model (GM), each training instance of the plurality of training instances includes: a corresponding free-form natural language input, and a corresponding initial query, the corresponding initial query including one or more placeholders; fine-tune, based on the plurality of training instances, the GM; and cause the GM to be deployed for utilization in generating subsequent initial queries including the one or more placeholders by processing subsequent free-form natural language inputs that are associated with client devices of users. In some implementations, for each of the plurality of training instances: the corresponding initial query comprises the corresponding free-form natural language input injected with the one or more placeholders.

In some examples, one or more of the plurality of training instances can be curated *(e.g.,* by a developer associated with the system that indicates a free-form NL input and an initial query including one or more placeholders which correspond to one another), whereas in additional or alternative examples, by using techniques described herein, one or more of the plurality of training instances can be automatically generated (*e.g.,* without intervention of the developer). By fine-tuning the GM using the plurality of training instances, the GM can be trained to determine, for a given free-form NL input, which placeholder(s) should be injected into the NL input (as well as optionally where the placeholder(s) should be injected) to form an appropriate initial query.

In some implementations, the processor(s) can generate the plurality of training instances. Generating the plurality of training instances can include: obtaining a plurality of free-form natural language requests, each free-form natural language request including one or more variables; for each of the free-form natural language requests: generating the corresponding initial query by replacing each of the one or more variables with one or more placeholders; generating the corresponding free-form natural language input by removing each of the one or more variables; and associating the corresponding free-form natural language input and the corresponding initial query to form each training instance of the plurality of training instances. As mentioned above, one or more of the plurality of training instances can be automatically generated (e.g., without intervention of the developer). One possible method of generating the training instances is to obtain 'complete' free-form NL requests including variable(s) which could be represented by placeholder(s). By stripping out variable(s) from a request, an 'artificial' free-form NL input can be formed. By replacing the variable(s) from the request with appropriate placeholders, an 'artificial' initial query can be formed. The artificial free-form NL input and artificial initial query can be associated or otherwise paired and stored together as a training instance which can be used in fine-tuning or retraining the GM.

In some implementations, the processor(s) can, subsequent to fine-tuning the GM, identify one or more additional placeholders; obtain a plurality of additional training instances to be utilized in fine-tuning the GM, each additional training instance of the plurality of additional training instances includes: an additional corresponding free-form natural language input, and an additional corresponding initial query, the additional corresponding initial query including the one or more additional placeholders; fine-tune, based on the plurality of additional training instances, the GM; and cause the GM to be deployed for utilization in generating further subsequent initial queries by processing further subsequent free-form natural language inputs that are associated with the client devices of the users. Put another way, the system can retrain the GM to be able to include additional placeholder(s) in initial queries (*e.g.,* in addition to the placeholder(s) which the GM was originally fine-tuned to be able to include in initial queries) by fine-tuning the GM using training instances which include these additional placeholder(s).

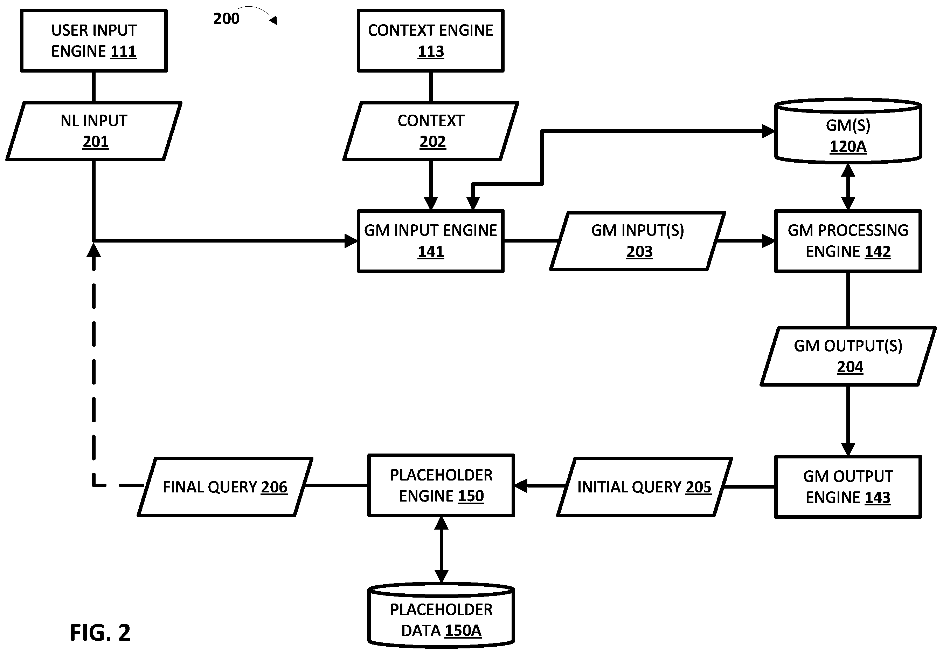

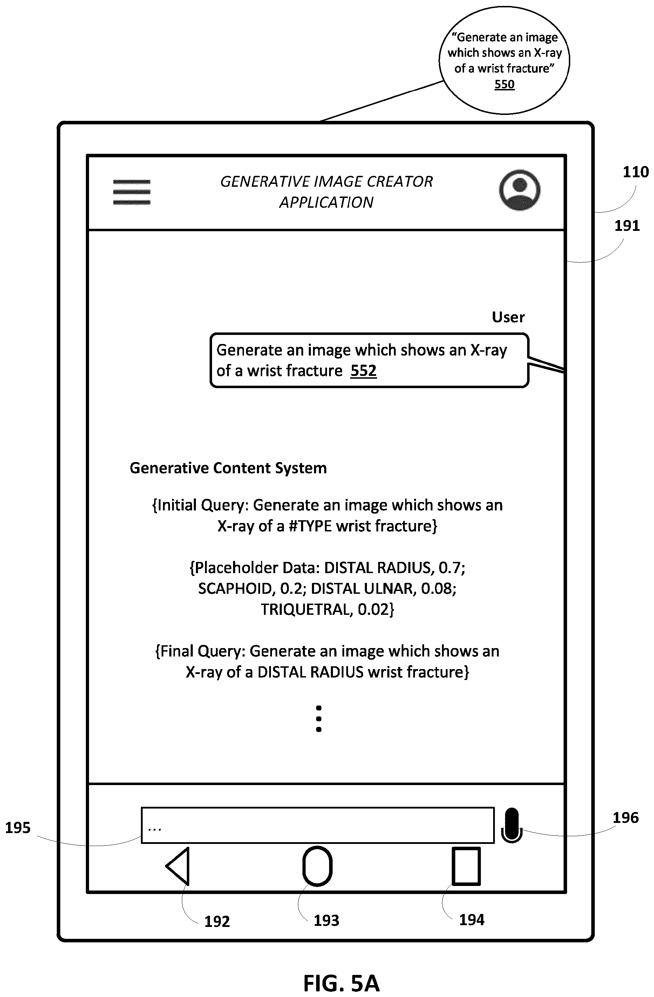

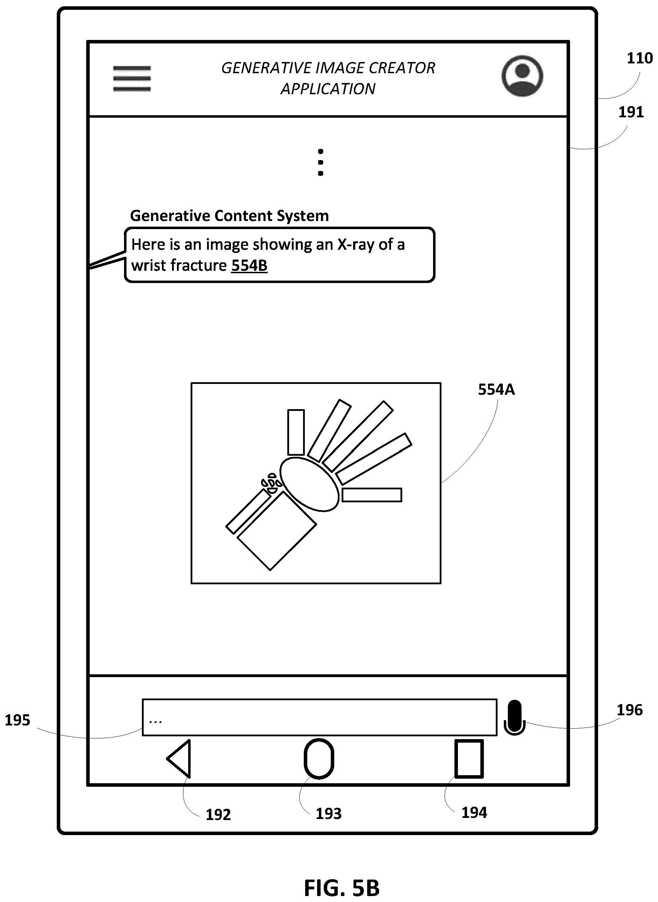

Whilst the techniques explained above have thus far been described with respect to a particular example, it will be apparent that these techniques are applicable to a wide variety of complex generative tasks. For example, these techniques can allow either single images or batches of images to be generated with characteristics that are reflective of the underlying probability distribution associated with a particular placeholder. By generating a batch of images in this manner, it is possible to create datasets which are specifically adapted for use in training techniques for machine learning model(s), *i.e.,* synthetic training data. To focus on one example (which is discussed further with respect to Figures 2, 5A, and 5B), a user can provide a request to the system to "Generate an image which shows an X-ray of a wrist fracture", or even "Generate a set of images which show X-rays of a wrist fracture". This NL input can be transformed into an initial query of *e.g.,* "Generate an image which shows an X-ray of a #TYPE wrist fracture". Placeholder data for the placeholder #TYPE can reveal that 70% of wrist fractures are DISTAL RADIUS wrist fractures, 20% of wrist fractures are SCAPHOID wrist fractures, 8% of wrist fractures are DISTAL ULNAR wrist fractures, and 2% of wrist fractures are TRIQUETRAL wrist fractures, as one non-limiting example.

By randomly selecting a type of wrist fracture (according to this probability distribution associated with the set of variables in the placeholder data), the initial request can be replaced by a final request of, *e.g.,* "Generate an image which shows an X-ray of a SCAPHOID wrist fracture". This prompt can then be passed to an image generation model (*e.g.,* the second GM or in some instances the first GM) to generate an image based on this final query. This technique can be repeated as many times as desired to generate a batch of images. It will be appreciated that generating images in this manner will allow the user to create a batch of images which is reflective of the underlying probability distribution associated with the #TYPE placeholder, *i.e.,* where roughly 70% of images show a distal radius wrist fracture, roughly 20% of images show a scaphoid wrist fracture, roughly 8% of images show a distal ulnar wrist fracture, and roughly 2% of images show a triquetral wrist fracture. In other words, the relative proportion of different types of data within the synthetic training dataset (*e.g.,* the proportion of data corresponding to each variable from the placeholder data) can be controlled based on the probability values associated with the variables (*e.g.,* which can be based on real life statistical data). This batch of images could be used, as one non-limiting example, as part of the training process for one or more machine learning models for use in the medical field which aim to categorize different types of wrist fracture. Since it can be assumed that the relative proportion of different types of training data within a training dataset can influence the performance of such machine learning models when trained using the training dataset, by controlling the relative proportion of data corresponding to each variable from the placeholder data in the synthetic training dataset (e.g., to reflect real life statistical data), performance of a machine learning model (e.g., in categorizing types of wrist fractures and/or other image classification tasks) can be improved according to the techniques described herein.

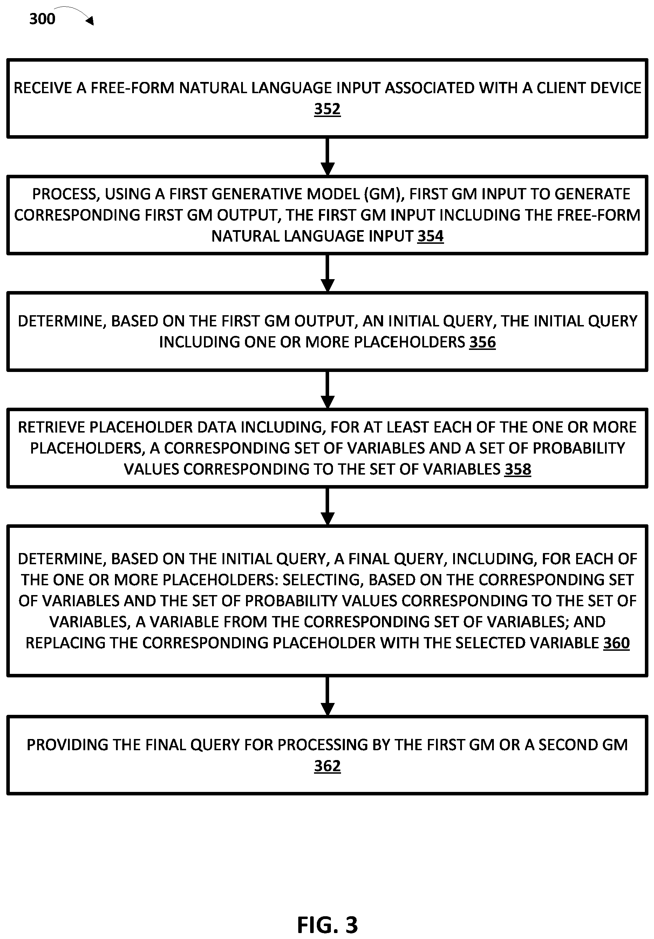

As another example of a complex generative task, the techniques described herein can allow a batch of videos (*e.g.,* gifs or other short videos) to be generated with characteristics that are reflective of the underlying probability distribution associated with a particular placeholder. By generating a batch of videos in this manner, it is possible to create datasets which are specifically adapted for use in training techniques for machine learning model(s), *i.e.,* synthetic training data. As one example (which is discussed extensively with regard to FIG. 3), a user can provide a request to the system to "Generate videos of a robot completing a pick-up task using its end effector in a house". By performing the techniques described herein, a batch of videos could be generated based on this command which are representative of different areas of a house (*e.g.,* different rooms), and/or which are representative of different objects (*e.g.,* obstacles and/or objects to be picked-up). This batch of videos could be used, as one non-limiting example, as part of the training process for one or more machine learning models which can be used to control robot(s) and enable them to perform subsequent pick-up tasks accurately. In other words, according to the techniques described herein, diversified synthetic training data can be generated. Since it can be assumed that performance of such machine learning models can be improved when trained on diversified training data, the techniques described herein can also be used to train machine learning models with improved performance.

By implementing techniques described herein, one or more technical advantages can be achieved. As one non-limiting example, the techniques described herein provide a computationally efficient method for determining detailed, well-defined prompts for content generation based on initial NL inputs from users. These techniques can provide improved prompts which are tailored to allow generative models (*e.g.,* image generation models) to provide responsive content (*e.g.,* one or more images) in a computationally efficient manner, whilst preserving the user's original intentions.

Specifically, the techniques described herein provide methods for generating detailed, well-defined prompts using GM(s) which can be trained on much less data than existing techniques. The GM(s) described herein, such as the first GM, only need to be trained to recognize which placeholders should be injected into NL inputs to generate appropriate initial queries (and optionally where they should be inserted). For example, in the context of the example request to "Generate an image which shows an X-ray of a wrist fracture", the GM(s) described herein only need to be trained to recognize that multiple types of wrist fracture exist, and that to provide a detailed, well-defined prompt, a #TYPE placeholder should be inserted into the NL input to form the initial query. Other techniques for dealing with (*e.g.,* further defining) this example request can involve using model(s) which are trained on specific data which includes different types of wrist fracture, *e.g.,* distal radius fractures, scaphoid fractures, distal ulnar fractures, triquetral fractures, etc. In contrast to these other techniques, the GM(s) used for generating initial queries as described herein do not need to be trained on such detailed, specific data. Accordingly, the computational burden of training the GM(s) described herein can be reduced *e.g.,* compared to these other techniques. For example, the storage requirements for training data can be reduced, and both the time and computational resources expended on training and fine-tuning the GM(s) can be reduced.

The techniques described herein also provide methods which are much more flexible and adaptable than existing techniques. Using the placeholder-based method described herein, the placeholder data can be adapted at any time to alter the manner in which generative content (*e.g.,* image(s)) is produced without retraining the GM(s). For example, for a particular placeholder, variables can be added or removed from the placeholder data, or the probability distribution associated with the set of variables can be changed. For example, in the context of the example request to "Generate an image which shows an X-ray of a wrist fracture", the techniques described herein can allow the distribution of different types of wrist fracture image to be changed over time. For instance, in response to updated medical data regarding the relative likelihood of the different types of wrist fracture, a developer associated with system(s) described herein or a user could update the placeholder data with additional variables, such that roughly 70% of images show a distal radius wrist fracture, roughly 15% of images show a scaphoid wrist fracture, roughly 10% of images show a distal ulnar wrist fracture, roughly 2% of images show a triquetral wrist fracture, roughly 2% of images show a lunate wrist fracture, and roughly 1% of images show a hook of hamate wrist fracture. Existing techniques may not be able to accurately reflect updated medical data of this nature without retraining their model(s) using additional data (involving the increased computational burden associated with extra training). As another example, placeholder data which is specific to a particular context (*e.g.,* a particular location such as a particular country) can be used. Put another way, the distribution of variables (or even the variables themselves), for a particular placeholder, can be different depending on contextual factors such as location or user profile information. Existing techniques may not be able to take this sort of context into account without using different model(s) for particular contexts (involving the increased computational burden associated with training and storing the extra model(s)).

The above description is provided as an overview of some implementations of the present disclosure. Further description of those implementations, and other implementations, are described in more detail below.

### BRIEF DESCRIPTION OF THE DRAWINGS

FIG. 1 depicts a block diagram of an example environment that demonstrates various aspects of the present disclosure, and in which some implementations disclosed herein can be implemented.
FIG. 2 depicts a process flow for utilizing various components from the example environment of FIG. 1, in accordance with various implementations.
FIG. 3 depicts a flowchart illustrating an example method of utilizing generative model(s) (GM(s)) to determine a final query following free-form natural language input, in accordance with various implementations.
FIG. 4 depicts a flowchart illustrating an example method of fine-tuning a GM for utilization in determining initial queries including one or more placeholders, in accordance with various implementations.
FIG. 5A and FIG. 5B depict various non-limiting examples of determining a final query following free-form natural language input, in accordance with various implementations.
FIG. 6 depicts an example architecture of a computing device, in accordance with various implementations.

### DETAILED DESCRIPTION OF THE DRAWINGS

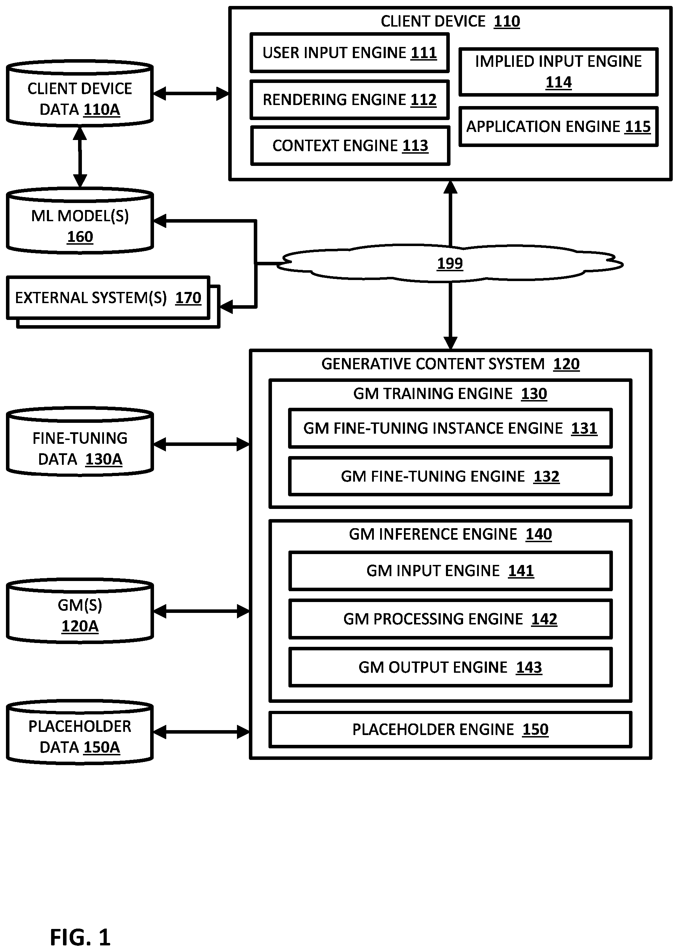

Turning now to FIG. 1, a block diagram of an example environment that demonstrates various aspects of the present disclosure, and in which implementations disclosed herein can be implemented is depicted. The example environment includes a client device 110 and a generative content system 120. In some implementations, all or aspects of the generative content system 120 can be implemented locally at the client device 110 (such that, for example, some or all of the processing performed by the generative content system 120 is locally processing performed at the client device 110). In additional or alternative implementations, all or aspects of the generative content system 120 can be implemented remotely from the client device 110 as depicted in FIG. 1 (*e.g.,* at remote server(s)). In those implementations, the client device 110 and the generative content system 120 can be communicatively coupled with each other via one or more networks 199, such as one or more wired or wireless local area networks ("LANs," including Wi-Fi^{®}, mesh networks, Bluetooth^{®}, near-field communication, etc.) or wide area networks ("WANs", including the Internet).

The client device 110 can be, for example, one or more of: a desktop computer, a laptop computer, a tablet, a mobile phone, a computing device of a vehicle (*e.g.,* an in-vehicle communications system, an in-vehicle entertainment system, an in-vehicle navigation system), a standalone interactive speaker (optionally having a display), a smart appliance such as a smart television, and/or a wearable apparatus of the user that includes a computing device (*e.g.,* a watch of the user having a computing device, glasses of the user having a computing device, a virtual or augmented reality computing device). Additional and/or alternative client devices can be provided.

The client device 110 can execute one or more software applications, via application engine 115, through which NL inputs, touch inputs, and/or other user inputs can be submitted and/or content that is responsive to the NL inputs, touch inputs, and/or the other user inputs can be rendered (*e.g.,* visually and/or audibly). The application engine 115 can execute one or more software applications that are separate from an operating system of the client device 110 (*e.g.,* one installed "on top" of the operating system) - or can alternatively be implemented directly by the operating system of the client device 110. For example, the application engine 115 can execute a web browser, generative image creator, or automated assistant installed on top of the operating system of the client device 110. As another example, the application engine 115 can execute a web browser software application, a generative image creator software application, or automated assistant software application that is integrated as part of the operating system of the client device 110. The application engine 115 (and the one or more software applications executed by the application engine 115) can interact with or otherwise provide access to (*e.g.,* as a front-end) the generative content system 120.

In various implementations, the client device 110 can include a user input engine 111 that is configured to detect user input provided by a user of the client device 110 using one or more user interface input devices. For example, the client device 110 can be equipped with one or more microphones that capture audio data, such as audio data corresponding to spoken utterances of the user or other sounds in an environment of the client device 110. Additionally, or alternatively, the client device 110 can be equipped with one or more vision components that are configured to capture vision data corresponding to images and/or movements (*e.g.,* gestures) detected in a field of view of one or more of the vision components. Additionally, or alternatively, the client device 110 can be equipped with one or more touch sensitive components (*e.g.,* a keyboard and mouse, a stylus, a touch screen, a touch panel, one or more hardware buttons, etc.) that are configured to capture signal(s) corresponding to typed and/or touch inputs directed to the client device 110.

Some instances of free-form NL input described herein can be a query for a response that is formulated based on user input provided by a user of the client device 110 and detected via user input engine 111. For example, the query can be a typed query that is typed via a physical or virtual keyboard, a suggested query that is selected via a touch screen or a mouse of the client device 110, a spoken voice query that is detected via microphone(s) of the client device 110 (and optionally directed to an automated assistant executing at least in part at the client device 110), or an image or video query that is based on vision data captured by vision component(s) of the client device 110 (or based on NL input generated based on processing the image using, for example, object detection model(s), captioning model(s), etc.). Other instances of NL input described herein can be a prompt for content that is formulated based on user input provided by a user of the client device 110 and detected via the user input engine 111. For example, the prompt can be a typed prompt that is typed via a physical or virtual keyboard, a suggested prompt that is selected via a touch screen or a mouse of the client device 110, a spoken prompt that is detected via microphone(s) of the client device 110, or an image or video prompt that is based on an image or video captured by a vision component of the client device 110.

In various implementations, the client device 110 can utilize one or more machine learning (ML) model(s) stored in ML model(s) database 160 to process the user input. For example, the user input received at the client device 110 can be a spoken utterance. In these examples, the user input engine 111 can process, using automatic speech recognition (ASR) model(s) stored in the ML model(s) database 160 (*e.g.,* a recurrent neural network (RNN) model, a transformer model, and/or any other type of ML model capable of performing ASR), audio data that capture the spoken utterance and that is generated by microphone(s) of the client device 110 to generate ASR output. The ASR output can include, for example, speech hypotheses (*e.g.,* term hypotheses and/or transcription hypotheses) that are predicted to correspond to the spoken utterance captured in the audio data, one or more corresponding predicted values (*e.g.,* probabilities, log likelihoods, and/or other values) for each of the speech hypotheses, a plurality of phonemes that are predicted to correspond to the spoken utterance captured in the audio data, one or more corresponding predicted values (*e.g.,* probabilities, log likelihoods, and/or other values) for each of the plurality of phonemes, and/or other ASR output. In these implementations, the user input engine 111 can select one or more of the speech hypotheses as recognized text that corresponds to the spoken utterance (*e.g.,* based on the corresponding predicted values for each of the speech hypotheses), such as when the user input engine 111 utilizes an end-to-end ASR model. In other implementations, the user input engine 111 can select one or more of the predicted phonemes (*e.g.,* based on the corresponding predicted values for each of the predicted phonemes), and determine recognized text that corresponds to the spoken utterance based on the one or more predicted phonemes that are selected, such as when the user input engine 111 utilizes an ASR model that is not end-to-end. In these implementations, the user input engine 111 can optionally employ additional mechanisms (*e.g.,* a directed acyclic graph) to determine the recognized text that corresponds to the spoken utterance based on the one or more predicted phonemes that are selected.

Notably, although the ML model(s) stored in the ML model(s) database 160 are described above as being implemented locally by the client device 110, it should be understood that is for the sake of example and is not meant to be limiting. For instance, the audio data that captures the spoken utterance can additionally, or alternatively, be streamed to the generative content system 120, and the generative content system 120 can utilize the ASR model(s) stored in the ML model(s) database 160 (or separate cloud-based ASR model(s)) to generate the ASR output.

In various implementations, the client device 110 can include a rendering engine 112 that is configured to render content for visual and/or audible presentation to a user of the client device 110 using one or more user interface output devices. For example, the client device 110 can be equipped with a display or projector that enables the content to be rendered as visual content (*e.g.,* image(s), video(s), etc.), and optionally along with other visual content (*e.g.,* textual content), via the client device 110. Additionally, or alternatively, the client device 110 can be equipped with speaker(s) that enable the content to be rendered as audible content via the client device 110.

In various implementations, the client device 110 can include a context engine 113 that is configured to determine a client device context (*e.g.,* current or recent context) of the client device 110 and/or a user context of a user of the client device 110 (or an active user of the client device 110 when the client device 110 is associated with multiple users). In some of those implementations, the context engine 113 can determine a context based on data stored in client device database 110A. The data stored in the client device database 110A can include, for example, client device data that characterizes current or recent interaction(s) of the client device 110 and/or a user of the client device 110, location data that characterizes a current or recent location(s) of the client device 110 and/or a geographical region associated with a user of the client device 110, user attribute data that characterizes one or more attributes of a user of the client device 110, user preference data that characterizes one or more preferences of a user of the client device 110, user profile data that characterizes a profile of a user of the client device 110, and/or any other data accessible to the context engine 113 via the client device 110A or otherwise.

For example, the context engine 113 can determine a current context based on a current state of a dialog session (*e.g.,* considering one or more recent inputs provided by a user during the dialog session), profile data, and/or a current location of the client device 110. For instance, the context engine 113 can determine a current context of "visitor looking for upcoming events in Louisville, Kentucky" based on a recently issued query, profile data, and/or an anticipated future location of the client device 110 (*e.g.,* based on recently booked hotel accommodations). As another example, the context engine 113 can determine a current context based on which software application is active in the foreground of the client device 110, a current or recent state of the active software application, and/or content currently or recently rendered by the active software application. A context determined by the context engine 113 can be utilized, for example, in supplementing or rewriting NL inputs that are received at the client device 110, in generating an implied NL input (*e.g.,* an implied query or prompt formulated independent of any explicit NL input provided by a user of the client device 110), and/or in determining to submit an implied NL input and/or to render result(s) (*e.g.,* responsive content) for an implied NL input.

In various implementations, the client device 110 can include an implied input engine 114 that is configured to: generate an implied NL input independent of any user explicit NL input provided by a user of the client device 110; submit an implied NL input, optionally independent of any user explicit NL input that requests submission of the NL input; and/or cause rendering of a response for the NL input, optionally independent of any explicit NL input that requests rendering of the response. For example, the implied input engine 114 can use one or more past or current contexts, from the context engine 113, in generating an implied NL input, determining to submit the implied NL input, and/or in determining to cause rendering of a response that is responsive to the implied NL input. For instance, the implied input engine 114 can automatically generate and automatically submit an implied query or implied prompt based on the one or more past or current contexts. Further, the implied input engine 114 can automatically push the response that is generated responsive to the implied query or implied prompt to cause them to be automatically rendered or can automatically push a notification of the response, such as a selectable notification that, when selected, causes rendering of the response. Additionally, or alternatively, the implied input engine 114 can submit respective implied NL input at regular or non-regular intervals, and cause respective responses to be automatically provided (or a notification thereof to be automatically provided).

Further, the client device 110 and/or the generative content system 120 can include one or more memories for storage of data and/or software applications, one or more processors for accessing data and executing the software applications, and/or other components that facilitate communication over one or more of the networks 199. In some implementations, one or more of the software applications can be installed locally at the client device 110, whereas in other implementations one or more of the software applications can be hosted remotely (*e.g.,* by one or more servers) and can be accessible by the client device 110 over one or more of the networks 199.

Although aspects of FIG. 1 are illustrated or described with respect to a single client device having a single user, it should be understood that is for the sake of example and is not meant to be limiting. For example, one or more additional client devices of a user and/or of additional user(s) can also implement the techniques described herein. For instance, the client device 110, the one or more additional client devices, and/or any other computing devices of a user can form an ecosystem of devices that can employ techniques described herein. These additional client devices and/or computing devices can be in communication with the client device 110 (*e.g.,* over the network(s) 199). As another example, a given client device can be utilized by multiple users in a shared setting (*e.g.,* a group of users, a household, a workplace, a hotel, etc.).

The generative content system 120 is illustrated in FIG. 1 as including a generative model (GM) training engine 130, a GM inference engine 140, and a placeholder engine 150. Some of these engines can be combined and/or omitted in various implementations. Further, these engines can include various sub-engines. For instance, the GM training engine 130 is illustrated in FIG. 1 as including a GM fine-tuning instance engine 131 and a GM fine-tuning engine 132. Further, the GM inference engine 140 is illustrated in FIG. 1 as including a GM input engine 141, a GM processing engine 142, and a GM output engine 143. Similarly, some of these sub-engines can be combined and/or omitted in various implementations. Accordingly, it should be understood that the various engines and sub-engines of the generative content system 120 illustrated in FIG. 1 are not meant to be limiting.

Further, the generative content system 120 is illustrated in FIG. 1 as interfacing with various databases, such as GM(s) database 120A, fine-tuning data database 130A, and placeholder data database 150A. Although particular engines and/or sub-engines are depicted as having access to particular databases, it should be understood that is for the sake of example and is not meant to be limiting. For instance, in some implementations, each of the various engines and/or sub-engines of the generative content system 120 can have access to each of the various databases. Further, some of these databases can be combined and/or omitted in various implementations. Accordingly, it should be understood that the various databases interfacing with the generative content system 120 illustrated in FIG. 1 are not meant to be limiting.

Moreover, the generative content system 120 is illustrated in FIG. 1 as interfacing with other system(s), such as external system(s) 170. The external system(s) 170 can include, for example, search system(s) (*e.g.,* text-based search system(s), image-based search system(s), video-based search system(s), etc.) and/or other generative system(s) (other text-based generative system(s), other image-based generative system(s), other video-based generative system(s), other audio-based generative system(s), etc.), such as the second GM as described herein. In some implementations, the external system(s) 170 are first-party system(s), whereas in other implementations, the external system(s) 170 are third-party system(s). As used herein, the term "first-party" or "first-party entity" refers to an entity that controls, develops, and/or maintains the generative content system 120, whereas the term "third-party" or "third-party entity" refers to an entity that is distinct from the entity that controls, develops, and/or maintains the generative content system 120.

As described in more detail herein (e.g., with respect to FIGS. 2, 3, 4, 5A, and 5B), the generative content system 120 can be utilized to generate initial queries including one or more placeholders following receiving free-form NL input associated with a client device (*e.g.,* client device 110). Specifically, the generative content system 120 can access a first GM which can process GM input including the NL input to generate corresponding GM output. Based on this GM output, an initial query including one or more placeholders can be determined. As also described in more detail herein, the generative content system 120 can be utilized to generate final queries (*e.g.,* using the placeholder engine 150 as described herein) for processing by the first GM or by a second GM. By processing the final query, the first GM or the second GM can generate responsive content which is responsive to the original NL input.

For example, in the case where the NL input is a request for an image generation task, by processing the final query, the first GM or the second GM can generate one or more image(s) which are responsive to the request for the image generation task. More specifically, the placeholder engine 150 of the generative content system 120 can retrieve placeholder data (*e.g.,* from placeholder database 150A) and use a set of variables which corresponds to a particular placeholder present in the initial query to replace the placeholder. This process involves randomly sampling the set of variables according to a corresponding probability distribution (*i.e.,* a set of probability values corresponding to the set of variables). In other implementations, generating final queries in this manner can be performed by one or more other system(s) (*i.e.,* other than placeholder engine 150), either implemented at the client device 110, or at one or more remote systems (*e.g.,* one or more server(s)). In implementations where the final query is provided for processing by the first GM, the first GM can be a multi-modal GM which is, for example, capable of producing both text-based and image-based outputs. In implementations where the final query is provided for processing by a second GM, this second GM can be implemented and/or accessed by the generative content system 120, or it can be implemented and/or accessed by other separate systems, such as one or more of the external system(s) 170.

In some implementations where the final query is provided for processing by a second GM, the first GM and second GM can be components of a single end-to-end GM, *e.g.,* a multi-modal end-to-end GM. In some of these implementations, each of the multiple GM components can be jointly fine-tuned in an end-to-end manner to perform respective parts of the methods described herein. Specifically, the first GM can be used in generating initial queries including one or more placeholders following receiving free-form NL input associated with a client device, and the second GM can be used in generating responsive content which is responsive to the original NL input. Although fine-tuning the first GM will generally be discussed independently of the second GM herein, it will be appreciated that in some implementations, fine-tuning the first and second GMs can be connected (*e.g.,* fine-tuning the second GM to generate responsive content can be at least partly based on or responsive to the fine-tuning process for the first GM).

As indicated above, in both implementations where the first GM is used to generate the responsive content and in implementations where a second GM is used to generate the responsive content, initially, the first GM is used to generate initial queries including one or more placeholders. The first GM can be fine-tuned to generate the initial queries including one or more placeholders accordingly. The first GM can be stored in the GM model(s) database 120A, and can include any GM (*e.g.,* Bard, Gemini, GPT, and/or any other GM, such as any other GM that is encoder-only based, decoder-only based, sequence-to-sequence based and that optionally includes an attention mechanism or other memory). In particular, the first GM may be a large language model (LLM). Notably, the GM(s) stored in the GM(s) database 120A can include billions of weights and/or parameters that are learned through initially training the GM on enormous amounts of diverse data. This enables these GM(s) to generate GM output as a probability distribution over a sequence of tokens as described herein. Further, in implementations using a second GM to generate the responsive content, the second GM can be fine-tuned to generate the responsive content accordingly. The second GM can also be stored in the GM model(s) database 120A (or can be stored remotely, *e.g.,* at a remote server), and can include any GM (*e.g.,* Imagen, DALL-E, Bard, Gemini, GPT, and/or any other GM, such as any other GM that is encoder-only based, decoder-only based, sequence-to-sequence based and that optionally includes an attention mechanism or other memory). In particular, the second GM may be an image generation model.

In fine-tuning the first GM, the GM fine-tuning instance engine 131 can access the fine-tuning data database 130A to obtain a plurality of training instances. Each of the plurality of training instances can include a corresponding free-form NL input, and a corresponding initial query, the corresponding initial query including one or more placeholders. Further, in fine-tuning the first GM based on a given training instance, of the plurality of training instances, the GM fine-tuning engine 132 can process the corresponding free-form NL input to generate a predicted initial query including one or more placeholders. In some implementations, the GM fine-tuning engine 132 can compare the predicted initial query to the corresponding initial query for the given training instance to generate one or more losses. Moreover, the GM fine-tuning engine 132 can update the first GM for generating initial queries including one or more placeholders based on one or more of the losses.

Although particular learning techniques for fine-tuning GM(s) are described above (e.g., supervised fine-tuning (SFT) techniques), it should be understood that this is for the sake of example and is not meant to be limiting. For instance, the GM fine-tuning engine 132 can additionally, or alternatively, utilize a reinforcement learning from human feedback (RLHF) technique where the predicted initial query including one or more placeholders is provided for presentation to a developer associated with the generative content system 120 and the developer can provide feedback with respect to the predicted initial query including one or more placeholders given the corresponding NL input that was processed using the GM(s). However, it should be noted that techniques that require involvement of the developer (or other users, such as Mechanical Turks) consume additional computational and pecuniary resources.

Turning now to FIG. 2, a process flow for utilizing various components from the example environment of FIG. 1 is depicted. For the sake of example, assume that a user of the client device 110 provides a user input which is detected as NL input 201 via the user input engine 111. For instance, assume that the NL input 201 is "Generate an image which shows an X-ray of a wrist fracture". Although the process flow 200 of FIG. 2 is described with respect to the NL input 201 being an explicit NL input, it should be understood that this is for the sake of example and is not meant to be limiting. For instance, the NL input 201 can additionally, or alternatively, be implied NL input (*e.g.,* as described with respect to the implied input engine 114).

In this example, the GM input engine 141 can process the NL input 201 to generate GM input(s) 203. Notably, in generating the GM input(s) 203, the GM input engine 141 can utilize an explicitation GM (*e.g.,* stored in the GM(s) database 120A). The explicitation GM can be one form of a GM that processes the NL input 201 (and optionally context 202 determined by the context engine 113 of the client device 110) to generate the GM input(s) 203. The GM input(s) 203 can then be provided to the GM processing engine 142 to generate GM output(s) 204, using one or more GM(s) from the GM(s) database 120A such as the first GM. Put another way, the GM input engine 141 can utilize an explicitation GM to process the raw NL input 201 and put it in a structured form that is more suitable for processing by the GM processing engine 142. Further, the GM input engine 141 can utilize the explicitation GM to incorporate the context 202 into the GM input(s) and optionally any other dynamic prompts to aid the GM processing engine 142 in generating the GM output(s) 204. For instance, and based on the NL input 201 being "Generate an image which shows an X-ray of a wrist fracture", the context 202 can include an indication that the NL input 201 was received at a client device 110 located in Canada, that the user of the client device 110 prefers the images to be presented in greyscale, and/or other context (*e.g.,* which can be obtained via a call to one of the external system(s) 170, such as the Internet).

During the understanding procedure, instructions can be included in the GM input(s) to request that an initial query including one or more placeholders be determined, for instance, by generating a dynamic prompt to do so. For instance, based on the NL input including a representation of the spoken utterance "Generate an image which shows an X-ray of a wrist fracture", and the relevant context information, a dynamic prompt can include, for instance, "Generate an image which shows an X-ray of a wrist fracture in greyscale", or the like. In this specific instance, the location of the client device 110 may not be relevant context information, and so may not be included in the dynamic prompt.

In some implementations, the explicitation GM can generate one or more queries based on the NL input 201, and submit the queries to one or more search systems (*e.g.,* search systems which are part of external system(s) 170), and process the search result document(s) in generating the GM input(s) 203. Continuing with the above example, the explicitation GM can generate and submit a first query of "X-ray" to obtain search results indicating that X-rays are a form of medical imaging used to capture images of bones and the like inside the human body. Further, the explicitation GM can generate and submit a second query of "wrist fracture" to obtain search results indicating that wrist fractures are a type of injury to the human body which can be examined and classified using X-ray imaging. Accordingly, this information can be included in the GM input(s) 203 for use in determining an initial query including one or more placeholders based on the NL input 201.

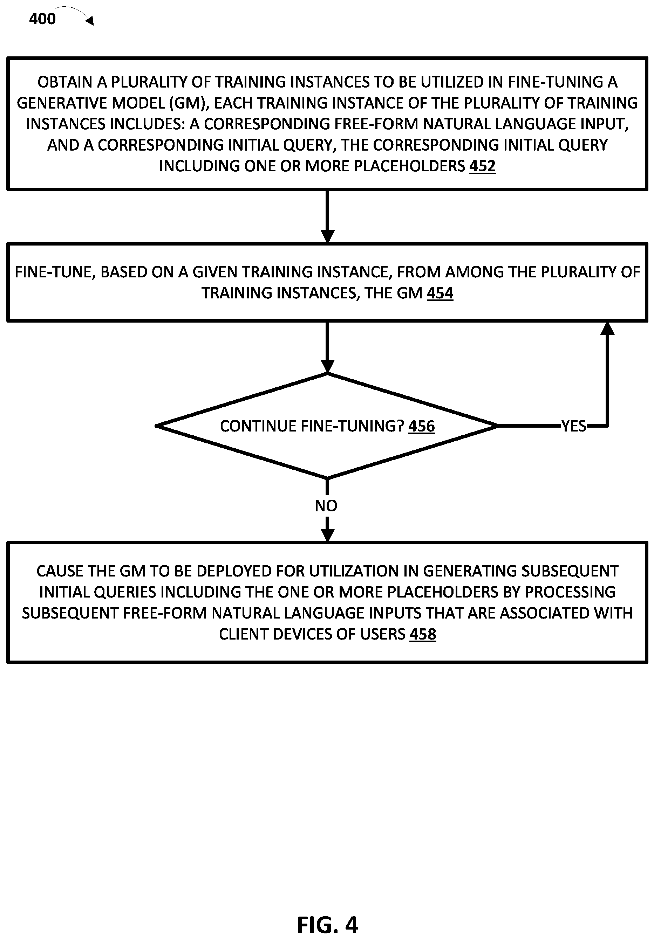

The GM processing engine 142 can process, using one or more GM(s) from among the GM(s) database 120A *(e.g.,* the first GM), the GM input(s) 203 to generate the GM output(s) 204. Moreover, in these implementations, the GM output(s) 204 can include a probability distribution over a sequence of tokens, such as words, phrases, or other semantic units that are predicted to be necessary for determining an initial query including one or more placeholders which is based on and/or responsive to the NL input 201. The one or more GM(s) can include millions or billions of weights and/or parameters that are learned through training the GM(s) on enormous amounts of diverse data. This enables the GM(s) to generate the GM output(s) 204 as the probability distribution over the sequence of tokens. Further, the GM(s) can be fine-tuned (*e.g.,* as described with respect to FIG. 4) to enable the GM(s) to generate the GM output including the probability distribution over the sequence of tokens.

Determining the initial query 205 including one or more placeholders can be performed at the GM output engine 143 based on the GM output(s) 204. In other examples, the GM output(s) 204 could be provided (*e.g.,* via the GM output engine 143) to the placeholder engine 150 for use in determining the initial query 205 including one or more placeholders. The GM output engine 143, for example, can determine, based on the probability distribution over the sequence of tokens, the one or more placeholders that are to be included in the initial query (and optionally where they are to be injected in the NL input to form the initial query).

In implementations where the initial query is determined at the GM output engine 143, the initial query can then be provided to the placeholder engine 150. (In implementations where the initial query is determined at the placeholder engine 150, the initial query will accordingly already be available to the placeholder engine 150). The placeholder engine 150 can be implemented as part of the generative content system 120 (as shown in FIG. 1), or in additional or alternative scenarios, can be implemented as part of one or more other systems, such as external system(s) 170, and/or client device 110. The placeholder engine 150 can retrieve placeholder data (stored in placeholder database 150A). In some examples, the placeholder engine 150 can retrieve different sets of placeholder data specific to each of the one or more placeholders present in the initial query. For example, based on the initial query including the wrist fracture #TYPE placeholder, the placeholder engine 150 can retrieve placeholder data specific to this placeholder, *e.g.,* {DISTAL RADIUS, 0.7; SCAPHOID, 0.2; DISTAL ULNAR, 0.08; TRIQUETRAL, 0.02}. This placeholder data comprises a set of variables (*i.e.,* DISTAL RADIUS, SCAPHOID, etc.) and a set of probability values corresponding to the set of variables (*i.e.,* 0.7, 0.2, etc.). The placeholder engine 150 can then perform a probabilistic selection operation in order to select one of the variables from the set of variables present in the placeholder data. Variables are selected based on their respective probabilities, *e.g.,* it would be expected that the DISTAL RADIUS variable would be selected roughly 70% of the time, etc. The placeholder engine 150 can then replace the placeholder (*e.g.,* "#TYPE" in the initial query) with the selected variable (*e.g.,* "TRIQUETRAL") to form a final query 206 which reads, in this non-limiting example, "Generate an image which shows an X-ray of a TRIQUETRAL wrist fracture".

The final query 206 can be provided by the placeholder engine 150 to an appropriate GM for further processing. In the above example, the final query 206 would be passed to an image generation model which can fulfill the user's request to "Generate an image...". In other examples, depending on the type of query, the final query 206 could be passed to a video generation model, an audio generation model, and/or a text generation model (*e.g.,* an LLM), as appropriate. In some scenarios, the second GM can be used to process the final query 206 in order to generate responsive content (*e.g.,* one or more images). In other scenarios, the first GM *(e.g.,* a separate image generation component of the first GM) can be used to process the final query 206 in order to generate responsive content (*e.g.,* one or more images). In some implementations of both of these possible scenarios, the final query 206 can be provided to the GM input engine 141 for further processing via the GM processing engine 142, and using the first GM or second GM which can be stored in the GM(s) database 120A. In these implementations, the responsive content (*e.g.,* one or more images) can be provided as further GM output(s) via the GM output engine 143. In some implementations where the second GM is used to process the final query 206, the second GM can be implemented by other system(s), *e.g.,* as part of external systems 170 rather than as part of generative content system 120. In these implementations, the final query 206 may not be provided as input to GM input engine 141, but may instead be provided as input directly to one or more component(s) associated with the second GM or to one or more system(s) that implement the second GM. In these implementations, providing the final query 206 to the second GM can involve transmitting the final query 206 to the one or more system(s) that implement the second GM *(e.g.,* via the network(s) 199). These system(s) can process the final query 206, determine responsive content (*e.g.,* one or more images) responsive to the original NL input 201, and optionally return the responsive content, *e.g.,* to the system(s) which transmitted the final query and/or to the client device. Transmitting the responsive content back to the client device can allow the client device to render the responsive content for display (*e.g.,* visually and/or audibly). In some instances, transmitting the final query to the system(s) which implement or manage the second GM may cause this processing of the final query and determining of the responsive content to occur. In some instances, transmitting the responsive content back to the client device for rendering may cause the rendering to occur.

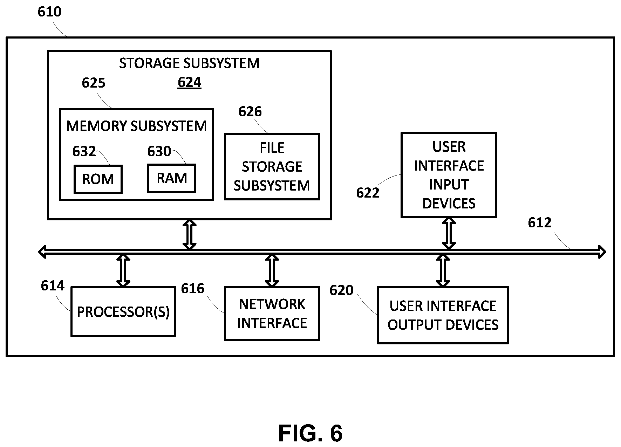

Turning now to FIG. 3, a flowchart illustrating an example method 300 of utilizing generative model(s) (GM(s)) to determine a final query following free-form natural language input. For convenience, the operations of the method 300 are described with reference to a system that performs the operations. This system of the method 300 includes one or more processors, memory, and/or other component(s) of computing device(s) (*e.g.,* client device 110 of FIG. 1, generative content system 120 of FIG. 1, computing device 610 of FIG. 6, one or more servers, and/or other computing devices). Moreover, while operations of the method 300 are shown in a particular order, this is not meant to be limiting. One or more operations may be reordered, omitted, and/or added.

At block 352, the system receives a free-form natural language input associated with a client device. As described with respect to the user input engine 111 of FIG. 1, the NL input can be received through a variety of means. For example, the client device 110 can be equipped with one or more microphones that capture audio data, and the NL input can comprise a spoken utterance of a user captured in audio data by the one or more microphones. As an example, assume that the NL input includes a request to "Generate videos of a robot completing a pick-up task using its end effector in a house".

At block 354, the system processes, using a first generative model (GM), first GM input to generate corresponding first GM output. The first GM input includes at least the free-form NL input. For example, the system can generate the first GM input (*e.g.,* as described with respect to the GM input engine 141 of FIGS. 1 and 2), and can process the first GM input, using the GM, to generate the first GM output (*e.g.,* as described with respect to the GM processing engine 142 of FIGS. 1 and 2). Although it has generally been described that a single GM is used to generate the first GM output, it will be appreciated that in some implementations, a plurality of GMs can be used (*e.g.,* the first GM as described herein and the explicitation GM as described with respect to FIG. 2).

At block 356, the system determines, based on the first GM output, an initial query. The initial query comprises one or more placeholders. For example, the system can determine the initial query including one or more placeholders based on one or more probability distributions over one or more sequences of tokens (*e.g.,* as described with respect to the GM output engine 143 of FIGS. 1 and 2). Continuing the above example, the first GM can provide an output from which *e.g.,* the GM output engine can determine an initial query of "Generate videos of a robot completing a pick-up task using its end effector in a #ROOM house". In this example, the first GM can have been trained and/or fine-tuned to effectively recognize that it is appropriate to further define the room in which the robot is completing the task in order to provide a detailed, well-defined video generation prompt. In some instances, the model can be fine-tuned to additionally include an #OBJECT placeholder (to further define an object which the robot picks up using its end effector) and/or an #OBSTACLE placeholder (to further define an obstacle in the way of the robot completing the pick-up task and which it, *e.g.,* needs to navigate around).

At block 358, the system retrieves placeholder data including, for at least each of the one or more placeholders, a corresponding set of variables and a set of probability values corresponding to the set of variables. For example, the system can retrieve placeholder data from the placeholder data database 150A (as described with respect to the placeholder engine 150 of FIGS. 1 and 2). Continuing the above example, the placeholder data retrieved for the #ROOM placeholder could be as follows: {LIVING ROOM, 0.4; KITCHEN, 0.3; BEDROOM, 0.1; GARAGE, 0.2}.

At block 360, the system determines, based on the initial query, a final query. Determining the final query includes, for each of the one or more placeholders: selecting, based on the corresponding set of variables and the set of probability values corresponding to the set of variables, a variable from the corresponding set of variables, and replacing the corresponding placeholder with the selected variable. For example, the system can determine the final query using the placeholder engine 150 (as described with respect to FIGS. 1 and 2). Continuing the above example, the variable could be randomly selected (according to the probabilities defined in the placeholder data) as the KITCHEN, and so the final query could be determined as "Generate a video of a robot completing a pick-up task using its end effector in a KITCHEN of a house". (Note that in this example, because the NL input requested multiple "videos", the final query can be adapted to provide a single request. By repeating the method described above to fulfill the request for multiple "videos", multiple final queries can be generated, of which we would expect roughly 40% to be final requests for videos in the living room, roughly 30% to be final requests for videos in the kitchen, roughly 10% to be final requests for videos in the bedroom, and roughly 20% to be final requests for videos in the garage).

At block 362, the system provides the final query for processing by the first GM or by a second GM. As described with respect to FIG. 2, the final query can be provided by the placeholder engine 150 to an appropriate GM for further processing. Continuing the example above, the appropriate GM in this instance would be a video generation model. In some scenarios, a second GM can be used to process the final query in order to generate responsive content *(e.g.,* one or more videos). In other scenarios, the first GM *(e.g.,* a separate video generation component of the first GM) can be used to process the final query in order to generate responsive content (*e.g.,* one or more videos). In some implementations, the responsive content (*e.g.,* one or more videos) can be transmitted, directly or indirectly, to the client device for rendering.

Turning now to FIG. 4, a flowchart illustrating an example method 400 of fine-tuning a generative model (GM) for generating initial queries including one or more placeholders (*e.g.,* the first GM described above in relation to FIGS. 1, 2, and 3) is depicted. For convenience, the operations of the method 400 are described with reference to a system that performs the operations. This system of the method 400 includes one or more processors, memory, and/or other component(s) of computing device(s) (*e.g.,* client device 110 of FIG. 1, generative content system 120 of FIG. 1, computing device 610 of FIG.6, one or more servers, and/or other computing devices). Moreover, while operations of the method 400 are shown in a particular order, this is not meant to be limiting. One or more operations may be reordered, omitted, and/or added.

At block 452, the system obtains a plurality of training instances to be utilized in fine-tuning a GM, each training instance of the plurality of training instances including: a corresponding free-form natural language input, and a corresponding initial query, the corresponding initial query including one or more placeholders. For example, the system can cause the GM fine-tuning instance engine 131 from FIG. 1 to obtain the plurality of training instances. In some implementations, one or more of the plurality of training instances can be curated by, for example, a developer that is associated with the generative content system 120 from FIG. 1. For instance, the corresponding free-form natural language input can be obtained from any suitable source, such as a conversation log, and the developer can manually inject one or more placeholders into the free-form natural language input in order to form the corresponding initial query. In additional or alternative implementations, one or more of the plurality of training instances can be generated using an automated process (*e.g.,* implemented by one or more trained GM(s), such as an LLM). For instance, free-form natural language requests can be obtained from any suitable source, such as a conversation log. These can be detailed, well-defined requests including, for example, multiple variables for a content generation task. Returning to an earlier example, such a request could be, for example, "Generate an image of a red hatchback car". By removing one or more of the variables (*e.g.,* "red", "hatchback"), a corresponding free-form natural language input can be formed (*e.g.,* "Generate an image of a car"). By replacing these one or more variables with appropriate placeholder(s), a corresponding initial query can be formed (*e.g.,* "Generate an image of a #COLOR #STYLE car"). The corresponding free-form natural language input and the corresponding initial query can be associated together in order to form a training instance to be included in the plurality of training instances. Upon being obtained and/or generated, the GM fine-tuning instance engine 131 from FIG. 1 can store the plurality of training instances in the fine-tuning data database 130A from FIG. 1.

Although the operations of block 452 are described with respect to obtaining a plurality of training instances to be utilized in fine-tuning the GM for generating initial queries including one or more placeholders, it should be understood that this is for the sake of example and is not meant to be limiting. For instance, the operations of block 452 can additionally, or alternatively, obtain a plurality of additional training instances to be utilized in fine-tuning the GM for generating initial queries including one or more additional placeholders. For example, subsequent to fine-tuning the GM, one or more additional placeholders can be identified, and it may be desirable to fine-tune the GM again in order to generate initial queries which can incorporate these one or more additional placeholders. In these instances, each additional training instance of the plurality of additional training instances includes: an additional corresponding free-form natural language input, and an additional corresponding initial query, the additional corresponding initial query including the one or more additional placeholders. Based on the example mentioned above, the additional corresponding free-form natural language input could again be "Generate an image of a car", but the additional corresponding initial query could be "Generate an image of a #COLOR #STYLE #SIZE car", in order to fine-tune the GM to recognize when to insert the additional placeholder "SIZE" (reflecting a parameter for the size of the car) into initial queries.

At block 454, the system fine-tunes, based on a given training instance, from among the plurality of training instances, the GM. For example, the GM fine-tuning engine 132 from FIG. 1 can obtain the given training instance from the fine-tuning data database 130A. Further, the GM fine-tuning engine 132 can cause the GM to process the corresponding free-form natural language input of the specific training instance to generate a predicted initial query including one or more placeholders. The GM fine-tuning engine 132 can compare the predicted initial query to the corresponding initial query for the given training instance to generate one or more losses. The GM fine-tuning engine 132 can then update the GM based on one or more of the losses, effectively fine-tuning the GM to perform a specific task of determining which placeholders to include for a particular free-form natural language input, and where to inject them into the free-form NL input in order to form an initial query. Notably, the GM that is being fine-tuned can be the first GM that is utilized by the GM processing engine 142 from FIG. 1 in determining initial queries including one or more placeholders.

At block 456, the system determines whether to continue fine-tuning the GM. The system can determine to continue fine-tuning the GM until one or more conditions are satisfied. The one or more conditions can include, for example, whether the GM has been fine-tuned based on a threshold quantity of training instances, whether a threshold duration of time has passed since the fine-tuning process began, whether performance of the GM has achieved a threshold level of performance, and/or other conditions.

If, at an iteration of block 456, the system determines to continue fine-tuning the GM, then the system returns to block 454. At a subsequent iteration of block 454, the system fine-tunes, based on a given additional training instance, from among the plurality of training instances, the GM. The system can continue fine-tuning the GM in this manner until the one or more conditions are satisfied at subsequent iterations of block 456.

If, at an iteration of block 456, the system determines not to continue fine-tuning the GM, then the system proceeds to block 458. At block 458, the system causes the GM to be deployed for utilization in generating subsequent initial queries including one or more placeholders (*e.g.,* as described with respect to FIG. 3).

Turning now to FIGS. 5A and 5B, various non-limiting examples of generating content responsive to NL input through utilization of GM(s) are depicted. A client device 110 *(e.g.,* the client device 110 from FIG. 1) may include various user interface components including, for example, microphone(s) to generate audio data based on spoken utterances and/or other audible input, speaker(s) to audibly render synthesized speech and/or other audible output, and/or a display 191 to visually render visual output. Further, the display 191 of the client device 110 can include various system interface elements 192, 193, and 194 (*e.g.,* hardware and/or software interface elements) that may be interacted with by a user of the client device 110 to cause the client device 110 to perform one or more actions. The display 191 of the client device 110 enables the user to interact with content rendered on the display 191 by touch input (*e.g.,* by directing user input to the display 191 or portions thereof (*e.g.,* to a text entry box 195, to a keyboard (not depicted), or to other portions of the display 191)) and/or by spoken input (*e.g.,* by selecting microphone interface element 196 - or just by speaking without necessarily selecting the microphone interface element 196 (*i.e*., an automated assistant may monitor for one or more terms or phrases, gesture(s) gaze(s), mouth movement(s), lip movement(s), and/or other conditions to activate spoken input) at the client device 110). Although the client device 110 depicted in FIGS. 5A and 5B is a mobile phone, it should be understood that is for the sake of example and is not meant to be limiting. For example, the client device 110 may be a standalone speaker with a display, a standalone speaker without a display, a home automation device, an in-vehicle system, a laptop, a desktop computer, and/or any other device capable of executing an automated assistant to engage in a human-to-computer dialog session with the user of the client device 110.

Referring specifically to FIG. 5A, assume that a user of the client device 110 accesses a generative image creator application, via the client device 110, that enables the user to interact with a generative content system (*e.g.,* the generative content system 120 of FIG. 1). Further assume that the user provides an NL input 552 of "Generate an image which shows an X-ray of wrist fracture" by providing a corresponding spoken utterance 550. In response to receiving the user input 552, the generative content system can determine an initial query including one or more placeholders, and then determine a final query for further processing (*e.g.,* in order to provide content responsive to the NL input). This process is described in more detail with respect to FIG. 3. For example, based on the user input 552 of "Generate an image which shows an X-ray of wrist fracture", an initial query of "Generate an image which shows an X-ray of a #TYPE wrist fracture" can be determined. The generative content system can retrieve placeholder data for the wrist fracture #TYPE placeholder including a set of variables and probability distribution of "DISTAL RADIUS, 0.7; SCAPHOID, 0.2; DISTAL ULNAR, 0.08; TRIQUETRAL, 0.02". By sampling the variables according to the probability distribution, the generative content system can select, for example "DISTAL RADIUS" as the variable to replace the #TYPE placeholder. The generative content system can replace the #TYPE placeholder with the selected variable to create a final query of "Generate an image which shows an X-ray of a DISTAL RADIUS wrist fracture". It will be appreciated that, in various implementations, the initial query, placeholder data, and final query are not rendered (*e.g.,* visually and/or audibly) for presentation to the user such that they are not perceivable by the user.

Referring now specifically to FIG. 5B, assume that the final query has been provided to an appropriate image generation model for processing. This image generation model could be the second GM as described herein, or could be the first GM (*e.g.,* a separate image generation component of the first GM). Assume that the chosen image generation model has processed the final query and generated a single image which is responsive to the final query (and is also responsive to the original NL input). Assume that this responsive image has been provided to the client device 110 (either directly from the image generation model, or indirectly, *e.g.,* via the generative content system). The client device can render the image for display at the client device as output 554A on display 191. Optionally, the client device could also render textual output 554B captioning or otherwise explaining the output 554A, e.g., "Here is an image showing an X-ray of a wrist fracture".

Although FIGS. 5A and 5B are described with respect to a request for an image generation task received at a generative image creator application, it should be understood that this is for the sake of example and is not meant to be limiting. In additional or alternative implementations, the request can be for a video generation task, an audio generation task, and/or a text generation task, and the application can correspondingly be a generative video creator application, a generative audio creator application and/or a generative text creator application.

Turning now to FIG. 6, a block diagram of an example computing device 610 that may optionally be utilized to perform one or more aspects of techniques described herein is depicted. In some implementations, one or more of a client device, generative content system component(s) or other cloud-based software application component(s), and/or other component(s) may comprise one or more components of the example computing device 610.

Computing device 610 typically includes at least one processor 614 which communicates with a number of peripheral devices via bus subsystem 612. These peripheral devices may include a storage subsystem 624, including, for example, a memory subsystem 625 and a file storage subsystem 626, user interface output devices 620, user interface input devices 622, and a network interface subsystem 616. The input and output devices allow user interaction with computing device 610. Network interface subsystem 616 provides an interface to outside networks and is coupled to corresponding interface devices in other computing devices.

User interface input devices 622 may include a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computing device 610 or onto a communication network.

User interface output devices 620 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 610 to the user or to another machine or computing device.

Storage subsystem 624 stores programming and data constructs that provide the functionality of some or all of the modules described herein. For example, the storage subsystem 624 may include the logic to perform selected aspects of the methods disclosed herein, as well as to implement various components depicted in FIGS. 1 and 2.

These software modules are generally executed by processor 614 alone or in combination with other processors. Memory 625 used in the storage subsystem 624 can include a number of memories including a main random-access memory (RAM) 630 for storage of instructions and data during program execution and a read only memory (ROM) 632 in which fixed instructions are stored. A file storage subsystem 626 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 626 in the storage subsystem 624, or in other machines accessible by the processor(s) 614.

Bus subsystem 612 provides a mechanism for letting the various components and subsystems of computing device 610 communicate with each other as intended. Although bus subsystem 612 is shown schematically as a single bus, alternative implementations of the bus subsystem 612 may use multiple busses.

Computing device 610 can be of varying types including a workstation, server, computing cluster, blade server, server farm, or any other data processing system or computing device. Due to the ever-changing nature of computers and networks, the description of computing device 610 depicted in FIG. 6 is intended only as a specific example for purposes of illustrating some implementations. Many other configurations of computing device 610 are possible having more or fewer components than the computing device depicted in FIG. 6.

In situations in which the systems described herein collect or otherwise monitor personal information about users, or may make use of personal and/or monitored information), the users may be provided with an opportunity to control whether programs or features collect user information (*e.g.,* information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

In some implementations, a method implemented by one or more processors is provided, and includes: receiving a free-form natural language input associated with a client device; processing, using a first generative model (GM), first GM input to generate corresponding first GM output, the first GM input including the free-form natural language input; determining, based on the first GM output, an initial query, the initial query including one or more placeholders; retrieving placeholder data including, for at least each of the one or more placeholders, a corresponding set of variables and a set of probability values corresponding to the set of variables; determining, based on the initial query, a final query; and providing the final query for processing by the first GM or a second GM. Determining the final query includes, for each of the one or more placeholders: selecting, based on the corresponding set of variables and the set of probability values corresponding to the set of variables, a variable from the corresponding set of variables; and replacing the corresponding placeholder with the selected variable;

These and other implementations of technology disclosed herein can optionally include one or more of the following features.

In some implementations, the method can further include: processing, using the second GM, second GM input to generate corresponding second GM output, the second GM input including the final query; and determining, based on the second GM output, responsive content. The responsive content can be responsive to the free-form natural language input. In some versions of those implementations, the method can further include causing the client device to render the responsive content.

In some additional or alternative versions of those implementations, the responsive content can include one or more images.

In some additional or alternative implementations, the first GM can be a large language model (LLM). In some additional or alternative implementations, the second GM can be an image generation model.

In some versions of those implementations, the responsive content can include one or more portions of video data, one or more portions of audio data, and/or one or more portions of text data.

In some additional or alternative implementations, the free-form natural language input can be determined based on audio data generated by one or more microphones of the client device.

In some additional or alternative implementations, retrieving the placeholder data can be based at least in part on context data.

In some additional or alternative implementations, the method can further include, for a given placeholder of the one or more placeholders: modifying, based on context data, the corresponding set of variables and/or the set of probability values corresponding to the set of variables.

In some versions of those implementations, the context data can be indicative of a location of the client device.

In some additional or alternative versions of those implementations, the context data can be indicative of user profile information associated with a user of the client device.

In some additional or alternative implementations, the first GM and the second GM can be components of an end-to-end GM.

In some additional or alternative implementations, the method can further include: for a given placeholder of the one or more placeholders: obtaining the placeholder data including the corresponding set of variables and the set of probability values corresponding to the set of variables; and modifying, based on user input, the corresponding set of variables and/or the set of probability values corresponding to the set of variables.

In some implementations, a method implemented by one or more processors is provided, and includes: obtaining a plurality of training instances to be utilized in fine-tuning a generative model (GM), each training instance of the plurality of training instances includes: a corresponding free-form natural language input, and a corresponding initial query, the corresponding initial query including one or more placeholders; fine-tuning, based on the plurality of training instances, the GM; and causing the GM to be deployed for utilization in generating subsequent initial queries including the one or more placeholders by processing subsequent free-form natural language inputs that are associated with client devices of users.

These and other implementations of technology disclosed herein can optionally include one or more of the following features.

In some implementations, for each of the plurality of training instances: the corresponding initial query can include the corresponding free-form natural language input injected with the one or more placeholders.

In some additional or alternative implementations, the method can further include: generating the plurality of training instances. Generating the plurality of training instances can include: obtaining a plurality of free-form natural language requests, each free-form natural language request including one or more variables; for each of the free-form natural language requests: generating the corresponding initial query by replacing each of the one or more variables with one or more placeholders; generating the corresponding free-form natural language input by removing each of the one or more variables; and associating the corresponding free-form natural language input and the corresponding initial query to form each training instance of the plurality of training instances.

In some additional or alternative implementations, the method can further include: subsequent to fine-tuning the GM, identifying one or more additional placeholders; obtaining a plurality of additional training instances to be utilized in fine-tuning the GM, each additional training instance of the plurality of additional training instances includes: an additional corresponding free-form natural language input, and an additional corresponding initial query, the additional corresponding initial query including the one or more additional placeholders; fine-tuning, based on the plurality of additional training instances, the GM; and causing the GM to be deployed for utilization in generating further subsequent initial queries by processing further subsequent free-form natural language inputs that are associated with the client devices of the users.

In addition, some implementations include one or more processors (e.g., central processing unit(s) (CPU(s)), graphics processing unit(s) (GPU(s)), and/or tensor processing unit(s) (TPU(s)) of one or more computing devices, where the one or more processors are operable to execute instructions stored in associated memory, and where the instructions are configured to cause performance of any of the aforementioned methods. Some implementations also include one or more computer-readable storage media (e.g., transitory and/or non-transitory) storing computer instructions executable by one or more processors to perform any of the aforementioned methods. Some implementations also include a computer program product including instructions executable by one or more processors to perform any of the aforementioned methods.

The following clauses form part of the present disclosure:
1. A method implemented by one or more processors, the method comprising:
   receiving a free-form natural language input associated with a client device;
   processing, using a first generative model (GM), first GM input to generate corresponding first GM output, the first GM input comprising the free-form natural language input;
   determining, based on the first GM output, an initial query, the initial query comprising one or more placeholders;
   retrieving placeholder data comprising, for at least each of the one or more placeholders, a corresponding set of variables and a set of probability values corresponding to the set of variables;
   determining, based on the initial query, a final query, wherein determining the final query comprises, for each of the one or more placeholders:
      selecting, based on the corresponding set of variables and the set of probability values corresponding to the set of variables, a variable from the corresponding set of variables; and
      replacing the corresponding placeholder with the selected variable; and providing the final query for processing by the first GM or a second GM.
2. The method of clause 1, further comprising:
   processing, using the second GM, second GM input to generate corresponding second GM output, the second GM input comprising the final query; and
   determining, based on the second GM output, responsive content, wherein the responsive content is responsive to the free-form natural language input.
3. The method of clause 2, further comprising:
   causing the client device to render the responsive content.
4. The method of clause 2, wherein the responsive content comprises one or more images.
5. The method of clause 2, wherein the first GM is a large language model (LLM).
6. The method of clause 5, wherein the second GM is an image generation model.
7. The method of clause 2, wherein the responsive content comprises one or more portions of video data, one or more portions of audio data, and/or one or more portions of text data.
8. The method of clause 1, wherein the free-form natural language input is determined based on audio data generated by one or more microphones of the client device.
9. The method of clause 1, wherein retrieving the placeholder data is based at least in part on context data.
10. The method of clause 9, wherein the context data is indicative of a location of the client device.
11. The method of clause 9, wherein the context data is indicative of user profile information associated with a user of the client device.
12. The method of clause 1, further comprising:

   for a given placeholder of the one or more placeholders:
   modifying, based on context data, the corresponding set of variables and/or the set of probability values corresponding to the set of variables.
13. The method of clause 1, wherein the first GM and the second GM are components of an end-to-end GM.
14. The method of clause 1, further comprising:
   for a given placeholder of the one or more placeholders:
   obtaining the placeholder data comprising the corresponding set of variables and the set of probability values corresponding to the set of variables; and
   modifying, based on user input, the corresponding set of variables and/or the set of probability values corresponding to the set of variables.
15. A system comprising:
   at least one processor; and
   memory storing instructions that, when executed by the at least one processor, cause the at least one processor to be operable to:
      receive a free-form natural language input associated with a client device;
      process, using a first generative model (GM), first GM input to generate corresponding first GM output, the first GM input comprising the free-form natural language input;
      determine, based on the first GM output, an initial query, the initial query comprising one or more placeholders;
      retrieve placeholder data comprising, for at least each of the one or more placeholders, a corresponding set of variables and a set of probability values corresponding to the set of variables;
      determine, based on the initial query, a final query, wherein the instructions to determine the final query comprise instructions to, for each of the one or more placeholders:
         select, based on the corresponding set of variables and the set of probability values corresponding to the set of variables, a variable from the corresponding set of variables; and
         replace the corresponding placeholder with the selected variable; and providing the final query for processing by the first GM or a second GM.
16. The system of clause 15, wherein the at least one processor is further operable to:
   process, using the second GM, second GM input to generate corresponding second GM output, the second GM input comprising the final query; and
   determine, based on the second GM output, responsive content, wherein the responsive content is responsive to the free-form natural language input.
17. The system of clause 16, further comprising:
   causing the client device to render the responsive content.
18. The system of clause 16, wherein the responsive content comprises one or more images, wherein the first GM is a large language model (LLM), and wherein the second GM is an image generation model.
19. The system of clause 15, wherein the first GM and the second GM are components of an end-to-end GM.
20. A non-transitory computer-readable storage medium storing instructions that, when executed by at least one processor, cause the at least one processor to be operable to perform operations, the operations comprising:
   receiving a free-form natural language input associated with a client device;
   processing, using a first generative model (GM), first GM input to generate corresponding first GM output, the first GM input comprising the free-form natural language input;
   determining, based on the first GM output, an initial query, the initial query comprising one or more placeholders;
   retrieving placeholder data comprising, for at least each of the one or more placeholders, a corresponding set of variables and a set of probability values corresponding to the set of variables;
   determining, based on the initial query, a final query, wherein determining the final query comprises, for each of the one or more placeholders:
      selecting, based on the corresponding set of variables and the set of probability values corresponding to the set of variables, a variable from the corresponding set of variables; and
      replacing the corresponding placeholder with the selected variable; and providing the final query for processing by the first GM or a second GM.

## Claims

1. A method implemented by one or more processors, the method comprising:
receiving a free-form natural language input associated with a client device;
processing, using a first generative model (GM), first GM input to generate corresponding first GM output, the first GM input comprising the free-form natural language input;
determining, based on the first GM output, an initial query, the initial query comprising one or more placeholders;
retrieving placeholder data comprising, for at least each of the one or more placeholders, a corresponding set of variables and a set of probability values corresponding to the set of variables;
determining, based on the initial query, a final query, wherein determining the final query comprises, for each of the one or more placeholders:
selecting, based on the corresponding set of variables and the set of probability values corresponding to the set of variables, a variable from the corresponding set of variables; and
replacing the corresponding placeholder with the selected variable; and providing the final query for processing by the first GM or a second GM.

2. The method of claim 1, further comprising:
processing, using the second GM, second GM input to generate corresponding second GM output, the second GM input comprising the final query; and
determining, based on the second GM output, responsive content, wherein the responsive content is responsive to the free-form natural language input.

3. The method of claim 2, further comprising:
causing the client device to render the responsive content.

4. The method of claim 2 or claim 3, wherein the responsive content comprises one or more images.

5. The method of any one of claims 2 to 4, wherein the first GM is a large language model (LLM).

6. The method of claim 5, wherein the second GM is an image generation model.

7. The method of any one of claims 2 to 6, wherein the responsive content comprises one or more portions of video data, one or more portions of audio data, and/or one or more portions of text data.

8. The method of any one of the preceding claims, wherein the free-form natural language input is determined based on audio data generated by one or more microphones of the client device.

9. The method of any one of the preceding claims, wherein retrieving the placeholder data is based at least in part on context data.

10. The method of claim 9, wherein the context data is indicative of at least one of: a location of the client device and/or user profile information associated with a user of the client device.

11. The method of any one of the preceding claims, further comprising:
for a given placeholder of the one or more placeholders:
modifying, based on context data, the corresponding set of variables and/or the set of probability values corresponding to the set of variables.

12. The method of any one of the preceding claims, wherein the first GM and the second GM are components of an end-to-end GM.

13. The method of any one of the preceding claims, further comprising:
for a given placeholder of the one or more placeholders:
obtaining the placeholder data comprising the corresponding set of variables and the set of probability values corresponding to the set of variables; and
modifying, based on user input, the corresponding set of variables and/or the set of probability values corresponding to the set of variables.

14. A system comprising:
at least one processor; and
memory storing instructions that, when executed by the at least one processor, cause the at least one processor to be operable to carry out the method of any one of the preceding claims.

15. A non-transitory computer-readable storage medium storing instructions that, when executed by at least one processor, cause the at least one processor to be operable to perform the method of any one of claims 1 to 13.
